# EUROPÄISCHE PATENTSCHRIFT

(11) **EP 2 756 236 B1**
(45) Veröffentlichungstag und Bekanntmachung des Hinweises auf die Patenterteilung: **20.01.2016**
(21) Anmeldenummer: 12758865.5
(22) Anmeldetag: 14.09.2012
(51) Int. Cl.: F24J 2/07, F24J 2/05, F24J 2/46, H01J 7/18, F24J 2/14

(54) **ABSORBERROHR**
ABSORBER TUBE
TUBE ABSORBEUR

(30) Priorität: 15.09.2011 DE 102011082767
(43) Veröffentlichungstag der Anmeldung: 23.07.2014
(73) Patentinhaber: Schott Solar AG, 55122 Mainz (DE)
(72) Erfinder: MÖLLENHOFF, Marc, 95444 Bayreuth (DE); SOHR, Oliver, 92637 Weiden (DE); KUCKELKORN, Thomas, 07743 Jena (DE)
(74) Vertreter: Mehler Achler
(86) Internationale Anmeldenummer: PCT/EP2012/068091
(87) Internationale Veröffentlichungsnummer: WO 2013/037953

(56) Entgegenhaltungen:
- DE-A1-102009 045 100
- DE-A1-102009 047 548
- DE-B3-102005 057 276

## Beschreibung

Die Erfindung betrifft ein Absorberrohr gemäß dem Oberbegriff des Anspruchs 1.

Ein Absorberrohr gemäß dem Oberbegriff offenbart die Schrift DE 10 2009 045100 A. Sonnenkollektoren können beispielsweise mit einem Parabolspiegel, auch Kollektorspiegel genannt, ausgestattet werden und in so genannten Parabolrinnen-Kraftwerken eingesetzt werden. In bekannten Parabolrinnen-Kraftwerken wird als Wärmeträgermedium ein Thermoöl eingesetzt, das mithilfe der von den Parabolspiegeln reflektierten und auf das Absorberrohr fokussierten Sonnenstrahlen bis ca. 400°C erhitzt werden kann. Das erhitzte Wärmeträgermedium wird durch das Metallrohr durchgeleitet und einem Verdampfungsprozess zugeführt, mit dessen Hilfe die Wärmeenergie in elektrische Energie umgewandelt wird.

Das Absorberrohr besteht dabei in der Regel aus einem Metallrohr, welches eine strahlungsabsorbierende Schicht aufweist, und einem Hüllrohr, welches das Metallrohr umgibt. Das Hüllrohr besteht aus einem Material, welches im Spektralbereich der Solarstrahlung transparent ist, vorzugsweise aus Glas. Der zwischen Metallrohr und Hüllrohr gebildete Ringraum ist in der Regel evakuiert und dient dazu, die Wärmeverluste an der äußeren Oberfläche des Metallrohres zu minimieren und so den Energieeintrag zu steigern.

Derartige Absorberrohre sind beispielsweise aus der DE 102 31 467 B4 bekannt.

Das als Wärmeträgermedium verwendete Thermoöl setzt mit zunehmender Alterung freien Wasserstoff frei, der im Thermoöl gelöst ist. Die Menge des gelösten Wasserstoffes hängt zum einen vom verwendeten Thermoöl und den Betriebsbedingungen des Ölkreislaufs, zum anderen aber auch von der Menge Wasser, welches mit dem Thermoöl in Berührung kommt, ab. Insbesondere durch Leckagen in Wärmetauschern kann eine Berührung mit Wasser häufiger vorkommen. Der freigewordene Wasserstoff gelangt infolge von Permeation durch das Metallrohr hindurch in den evakuierten Ringraum, wobei die Permeationsrate mit steigender Betriebstemperatur des Metallrohres ebenfalls zunimmt. Als Folge davon steigt auch der Druck im Ringraum, was eine Erhöhung der Wärmeleitung durch den Ringraum zur Folge hat, die wiederum zu Wärmeverlusten und zu einem geringeren Wirkungsgrad des Absorberrohres bzw. des Sonnenkollektors führt.

Um den Druckanstieg im Ringraum zumindest zu reduzieren und damit die Lebensdauer des Absorberrohres zu verlängern, kann der in den Ringraum gelangte Wasserstoff durch Gettermaterialien gebunden werden. Absorberrohre, welche im Ringraum mit Gettermaterialien versehen sind, sind beispielsweise aus der WO 2004/063640 A1 bekannt. Die Aufnahmekapazität der Gettermaterialien ist aber begrenzt. Nach Erreichen der maximalen Beladungskapazität steigt der Druck im Ringraum solange an, bis dass er im Gleichgewicht mit dem Partialdruck des freien, aus dem Thermoöl in den Ringraum gelangten Wasserstoffes ist. Durch den Wasserstoff entsteht eine erhöhte Wärmeleitung im Ringraum mit den oben genannten nachteiligen Folgen für den Wirkungsgrad des Sonnenkollektors.

Aus der DE 10 2005 057 276 B3 ist ein Absorberrohr bekannt, bei dem Edelgas in den Ringraum eingeleitet wird, wenn die Kapazität des Gettermaterials erschöpft ist.

Das Edelgas befindet sich in einem mit Lot verschlossenen Behälter, der zu gegebener Zeit von außen geöffnet wird. Im Ringspalt bildet sich dadurch ein H2/Edelgasgemisch, dessen Wärmeleitfähigkeit nur geringfügig höher im Vergleich zum evakuierten Zustand ist. Die Unterbringung des Behälters im Vakuumraum des Absorberrohrs erfordert eine berührungslose Öffnung von außen. Diese kann durch Wärmeeintrag über das Erschmelzen eines Lotes geschehen. Die andere Möglichkeit besteht darin, induktiv oder über das Erhitzen eines Zwischenrings in dessen Nähe der Behälter angebracht ist, den Behälter zu öffnen. Der Nachteil dieser Öffnungsmethode besteht darin, dass der Wärmeeintrag nicht in ausreichendem Maße gezielt auf den Lotverschluss des Behälters gerichtet werden kann, sondern alle Bauteile in der Nähe des Behälters mit erwärmt. Insbesondere wenn das Hüllrohr aus Glas besteht, ist die Verbindungsstelle von Glas und metallischen Bauteile (Glasmetallverbindung) gefährdet.

Die Position des Behälters im Hüllrohr hat grundsätzlich den Nachteil, dass der Behälter durch die Einstrahlung erhitzt wird und der Lotverschluss sich ungewollt öffnen kann. Weitere Nachteile sind in der Versprödung des Lotes durch Wasserstoffaufnahme zu sehen. Außerdem macht die komplizierte Geometrie des Behälters die Herstellung der mit lotverschlossenen Öffnung den gesamten Behälter teuer.

Es ist Aufgabe der Erfindung ein Absorberrohr zur Verfügung zu stellen, das einen Behälter aufweist, der nicht die genannten Nachteile besitzt und auf einfache Weise geöffnet werden kann.

Diese Aufgabe wird mit einem Absorberrohr mit den Merkmalen des Anspruchs 1 gelöst.

Unter einem Druckbehälter wird ein geschlossener Behälter verstanden, der insbesondere kugel- oder als zylinderförmig ausgebildet ist. Der Druckbehälter kann ein Rohr aufweisen. Das Rohr kann entsprechend des verfügbaren Bauraums auch eine gebogene Gestalt aufweisen.

Der Druckbehälter weist mindestens einen gewölbten Boden auf. Bevorzugt ist ein halbkugelförmiger Boden. Auch der Deckel kann gewölbt, insbesondere auch halbkugelförmig ausgebildet sein.

Unter einem lotfreien Druckbehälter wird ein Druckbehälter verstanden, der kein Lot, keinen Verschluss mit Lot und kein Verschlussmaterial aus Lot aufweist. Ein lotfreier Druckbehälter ist ein Druckbehälter mit einem lotfreien Verschluss. Verschlussteile sind Bestandteil des Druckbehälters und ebenfalls lotfrei.

Das Lot ist ein wärmeempfindliches Material, dessen Schmelzpunkt weit unterhalb des übrigen Materials des Druckbehälters liegt. Unter einem Lot wird eine Metalllegierung verstanden, die je nach Einsatzfall aus einem bestimmten Mischungsverhältnis von Metallen besteht, hauptsächlich Blei, Zinn, Zink, Silber und Kupfer. Lot verlötet geeignete Metalle und Legierungen wie z.B. Kupfer, Bronze, Messing, Tombak, Neusilber, Silber, Gold, Hartblei, Zink, Aluminium aber auch Eisen, indem es sich als Schmelze oberflächlich mit diesen verbindet bzw. legiert und nach Abkühlung erstarrt. Diese Legierbarkeit des Lotes mit den metallischen Werkstücken, Materialien, Bauelementen, Drähten usw. ist die Voraussetzung für eine dauerhafte feste stoffschlüssige Lötverbindung. Das Lot hat die Eigenschaften, dass sein Schmelzpunkt niedriger ist als der der zu verbindenden metallischen Werkstücke. Lotfrei bedeutet, dass der Druckbehälter an keiner Stelle, insbesondere nicht an einer Öffnung, Lot aufweist.

Der Druckbehälter kann einen Flaschenhals aufweisen, der eine Öffnung aufweist, die mittels eines Verschlusselements, beispielsweise in Gestalt einer Platte verschlossen sein. Das Verschlusselement ist vorzugsweise mittels Schweißen an dem befüllten Druckbehälter befestigt. Bevorzugte Schweißverfahren sind Reibschweißen, Widerstandsschweißen und Laserschweißen.

Eine weitere bevorzugte Ausführungsform sieht vor, dass der Behälter an beiden Enden einen Flaschenhals mit einem Verschlusselement aufweist.

Der Druckbehälter ist vollständig geschlossen und weist keine vorbereitete Öffnung auf, die mit einem wärmeempfindlichen Material verschlossen ist, wie dies beispielsweise bei einem Lotverschluss der Fall ist.

Der Druckbehälter weist zum Befüllen mit Schutzgas mindestens eine Öffnung auf, die mit einem Verschlussteil verschlossen ist. Das Verschlussteil kann beispielsweise der Deckel oder der Boden sein. Ein bevorzugtes Verschlussteil kann auch eine Platte sein, insbesondere eine runde Platte.

Rotationssymmetrische Bauteile haben den Vorteil, dass sie einfach abgedichtet und mittels Widerstands- oder Reibschweißen an der Behälteröffnung befestigt werden können.

Der Druckbehälter kann z.B. flaschenförmig ausgebildet sein. Hierbei kann das Verschlussteil an der Öffnung des Flaschenhalses befestigt werden.

Vorzugsweise besteht der Druckbehälter aus Stahl. Nach EN 10020 ist Stahl ein Werkstoff, dessen Massenanteile an Eisen größer ist als der jedes anderen Elementes, dessen Kohlenstoffgehalt im Allgemeinen < 2% ist und der andere Elemente enthält. Stahl ist korrosionsresistent, gasundurchlässig und mechanisch stabil und somit als Schutzgasbehälter in besonderem Maße geeignet.

Bevorzugte Stahlsorten sind solche, die vorzugsweise tiefziehbar, vakuumtauglich und/oder bis ca. 600°C warmfest sind.

Der Druckbehälter kann mittels eines Laserbohrverfahrens geöffnet werden. Bei entsprechender Laserleistung kann der Druckbehälter in sehr kurzer Zeit geöffnet werden. Das Verfahren hat den Vorteil, dass der Druckbehälter von außen geöffnet werden kann, ohne dass andere Komponenten des Absorberrohrs erhitzt und somit beschädigt werden. Der Laserstrahl wird gezielt auf den Behälter gerichtet, der an einer beliebigen Stelle im Ringraum unter dem Hüllrohr angeordnet sein kann, die für einen durch das Hüllrohr dringenden Laserstrahl erreicht werden kann. Laserbohren ist ein nicht spanendes Bearbeitungsverfahren, bei dem mittels Laser lokal so viel Energie in das Werkstück eingebracht wird, dass der Werkstoff aufschmilzt und verdampft.

Der Schmelzpunkt von Stahl kann in einem großen Bereich bis ca. 1500°C eingestellt werden. Es ist daher möglich den Schmelzpunkt des Behältermaterials einschließlich der Wanddicke des Druckbehälters und die Laserparameter zum Öffnen des Behälters in optimaler Weise aufeinander einzustellen.

Wegen des hohen Schmelzpunktes von Stahl ist die maximal zulässige Temperatur des Druckbehälters höher als diejenige eines mit Lot verschlossenen Behälters. Es ist nicht erforderlich, den Druckbehälter beispielsweise vor Sonneneinstrahlung, die zu einer Erwärmung des Druckbehälters führt, zu schützen.

Vorzugsweise besteht der Druckbehälter aus Edelstahl. Edelstahl bezeichnet legierte oder unlegierte Stähle mit besonderem Reinheitsgrad, z.B. Stähle, deren Schwefel- und Phosphorgehalt 0,025% nicht überschreitet (siehe EN 10020).

Bevorzugte Edelstähle sind WNr. 1.4303 (insbesondere X4CrNi18-12), WNr. 1.4306 (insbesondere X2CrNi19-11), WNr. 1.4541, WNr. 1.4571.

Der Druckbehälter kann am Metallrohr oder am Hüllrohr mittels einer geeigneten Halteeinrichtung angeordnet sein. Vorzugsweise ist der Druckbehälter an einem Metallrohr und Hüllrohr verbindenden Bauteil angeordnet. Dies kann insbesondere eine Dehnungsausgleichseinrichtung sein.

Der Druckbehälter kann beispielsweise durch Schweißen vorzugsweise durch Reibschweißen befestigt werden. Auch andere Schweißverfahren, wie z. B. Laserschweißen oder Widerstandsschweißen können zum Einsatz kommen.

Die Wanddicke des Druckbehälters liegt vorzugsweise bei 0,5 - 1 mm, insbesondere bei 0,6 - 0,8 mm. Die Wanddicke kann auch kleiner als 0,5 mm betragen, vorzugsweise 0,2 bis < 0,5 mm, insbesondere 0,45 mm.

Der Druckbehälter ist mit einem Schutzgas, z. B. einem Edelgas mit geringer Wärmeleitfähigkeit gefüllt. Es sind insbesondere Xenon oder Krypton bevorzugt. Der Druck im Behälter bei Raumtemperatur beträgt vorzugsweise 5-10 bar.

Der Druckbehälter kann am Metallrohr, am Hüllrohr oder an einem Hüllrohr und Metallrohr verbindenden Bauteil angeordnet sein. Wenn z. B. eine Dehnungsausgleichseinrichtung zwischen dem Hüllrohr und dem Metallrohr vorgesehen ist, ist der Druckbehälter vorzugsweise an einer solchen Dehnungsausgleichseinrichtung angeordnet. Diese Dehnungsausgleichseinrichtung kann beispielsweise einen Faltenbalg und ein entsprechendes Anschlusselement aufweisen. Der Druckbehälter ist beispielsweise an dem Anschlusselement mittels einer Halterung, einem oder mehreren Halteelementen, einer Halteklammer, einem Haltebügel oder auch einem Aufnahmeteller befestigt. Ein solcher Aufnahmeteller kann beispielsweise auch an dem Metallrohr vorgesehen sein. Vorzugsweise umschließt die Halterung den Druckbehälter auf der dem Metallrohr zugewandten Seite des Druckbehälters. Die Halterung ist vorzugsweise wannenförmig ausgebildet.

Diese Ausgestaltung der Halterung hat den Vorteil, dass der Druckbehälter vor Wärmeabstrahlung des Absorberrohrs, vor defokussierter einfallender solarer Strahlung vom Kollektorspiegel und direkter Sonneneinstrahlung weitgehend geschützt wird. Starke Einstrahlung kann das Behältermaterial unter Umständen bezüglich seiner Festigkeit beeinträchtigen. Außerdem steigt der Gasdruck im Druckbehälter aufgrund der Temperaturerhöhung an. Beide Effekte tragen dazu bei, dass der Druckbehälter möglicherweise bersten könnte. Durch die Abschirmung mittels der Halterung wird dieses Problem verringert.

Das Material des Druckbehälters wird beim Laserbeschuss entgegen des eintreffenden Strahls verdampft bzw. ausgeworfen und schlägt sich im Ringraum des Absorberrohrs nieder. Sobald die Wand des Druckbehälters durchdrungen ist, kann das Schutzgas austreten. Hierbei kann sich das Material u. U. auch an der Innenseite des Hüllrohrs niederschlagen. Durch den noch andauernden Laserbeschuss erhitzt sich der Niederschlag und damit auch das Hüllrohr. Durch diese Wärmeeinwirkung entstehen mechanische Spannungen im Hüllrohr, welche das Hüllrohr schädigen können.

Vorzugsweise ist daher im Ringraum benachbart zum Druckbehälter ein optisches Element angeordnet, was den Vorteil hat, dass das Material des Behälters, das beim Laserbeschuss entgegen des eintreffenden Strahls in Richtung des Hüllrohres verdampft bzw. ausgeworfen wird, sich an diesem optischen Element niederschlägt. Es wird dadurch verhindert, dass sich dieser Niederschlag am Hüllrohr ausbildet.

Das optische Element kann am Hüllrohr, am Metallrohr oder am Druckbehälter angeordnet sein.

Die Halterungen für das optische Element können beispielsweise mit der Halterung des Druckbehälters kombiniert sein oder an einer Halterung des Druckbehälters angeordnet sein.

Das optische Element ist vorzugsweise im Bereich zwischen dem Druckbehälter und dem Hüllrohr angeordnet. Ein solches optisches Element kann eine Glasplatte, insbesondere eine planare Glasplatte sein. Diese Glasplatte fängt das Behältermaterial auf und schützt so das Hüllrohr.

Gemäß einer weiteren Ausführungsform kann dieses optische Element auch als Linse insbesondere als konkave Linse ausgeführt sein, um die durch das Hüllrohr verursachten Abbildungsfehler des Laserstrahls zu korrigieren.

Gemäß einer weiteren Ausführungsform kann das optische Element ein Abschnitt eines Glasröhrchens sein, in dem der Druckbehälter angeordnet ist. Es ist auch möglich, dass das Glasröhrchen in einem Abschnitt bearbeitet ist und dort beispielsweise ein planarer Abschnitt oder eine Linse vorgesehen ist.

Eine weitere Ausführungsform sieht vor, dass das optische Element eine Blende ist. Die Blendenöffnung ist vorzugsweise nur geringfügig größer als der Strahldurchmesser des Laserstrahls. Bevorzugterweise weist die Blende eine kreisförmige Blendenöffnung auf, deren Durchmesser vorzugsweise ≥ 300 µm ist.

Gemäß einer weiteren Ausführungsform kann das optische Element auch seitlich neben dem Behälter angeordnet sein. In diesem Fall ist das optische Element vorzugsweise ein Spiegel, insbesondere ein Umlenkspiegel. Der Laserstrahl wird über den Umlenkspiegel auf den Behälter gelenkt. Da sich das durch Laserbeschuss Behältermaterial entgegen der Strahlrichtung ausbreitet, trifft es auf den Spiegel und nicht das Hüllrohr auf

Beispielhafte Ausführungsformen werden anhand der Zeichnungen näher erläutert.

Es zeigen:
- Figur 1: eine Seitenansicht eines Schutzgasbehälters,
- Figur 2: einen Querschnitt durch ein Absorberrohr gemäß einer ersten Ausführungsform,
- Figur 3, 4 und 5: zeigen Querschnitte von Absorberrohren gemäß weiterer Ausführungsformen,
- Figur 6: eine Ausführungsform eines Absorberrohrs im Längsschnitt,
- Figur 7 bis 12: verschiedene Ausführungsformen mit Befestigungsmitteln für den Druckbehälter und das optische Element und
- Figur 13: eine wannenförmige Halterung mit Druckbehälter.

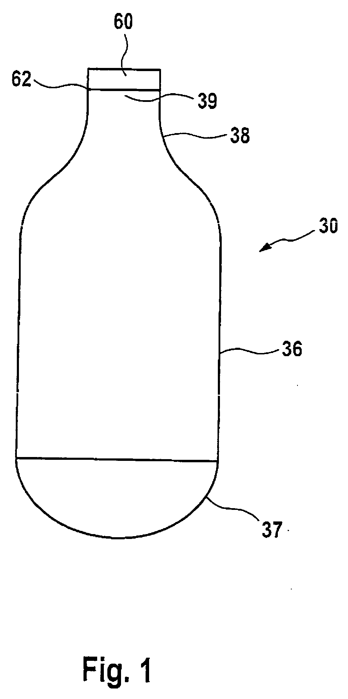

In der Figur 1 ist ein Druckbehälter 30 in Seitenansicht dargestellt. Der Druckbehälter besitzt eine flaschenförmige Gestalt mit einem zylindrischen Mantel 36 und einem gewölbten Boden 37. Der Boden ist als halbkugelförmiger Boden dargestellt.

Der zylinderförmige Mantel 36 geht in einen Flaschenhals 38 über, der eine Öffnung 39 aufweist. Die Öffnung 39 ist mittels eines Verschlusselementes in Form einer runden Platte 60 verschlossen. Das Verschlusselement ist mittels Reibschweißen an dem befüllten Druckbehälter 30 befestigt, so dass eine Schweißnaht 62 ausgebildet ist.

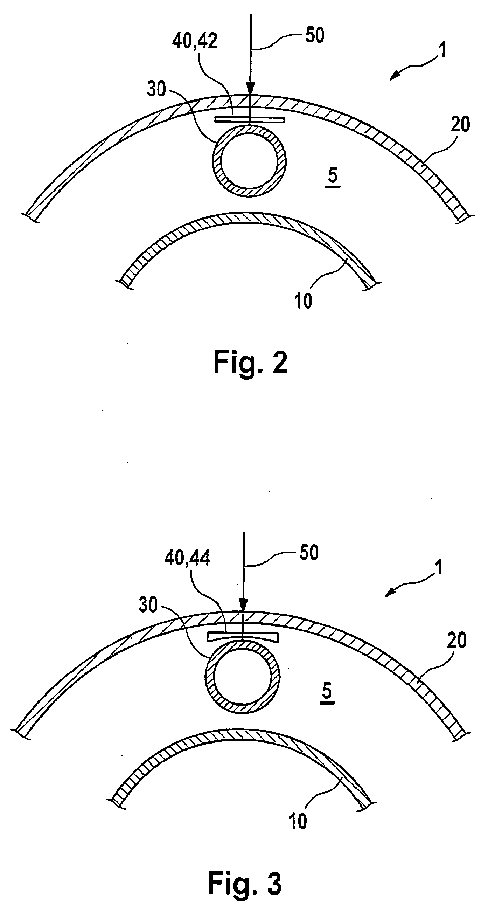

In der Figur 2 ist ein Ausschnitt aus einem Absorberrohr 1 schematisch dargestellt. Das Absorberrohr 1 weist ein Metallrohr 10 auf, das von Wärmetauscherflüssigkeit durchströmt wird und wie eingangs beschrieben worden ist, strahlungsabsorbierende Schichten aufweist.

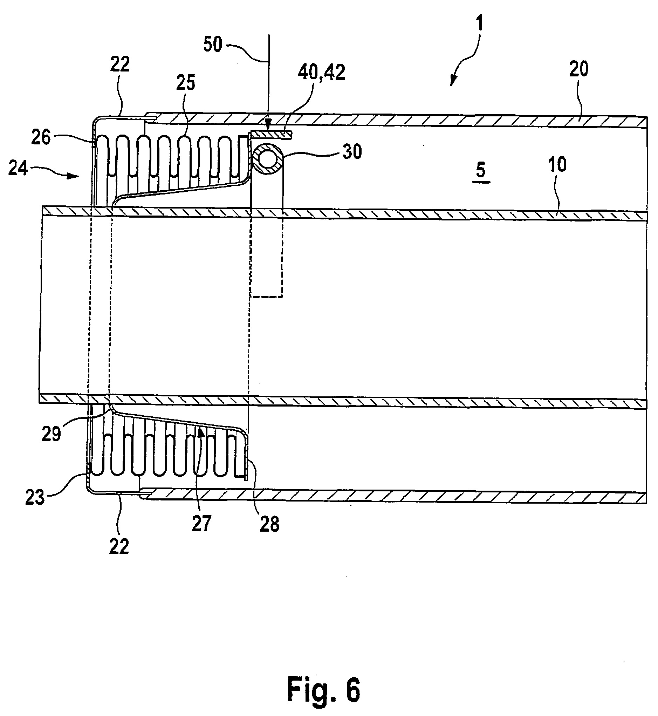

Dieses Metallrohr 10 ist konzentrisch in einem für Solarstrahlung transparenten Hüllrohr 20 angeordnet, das aus beispielsweise Glas besteht. Zwischen dem Metallrohr 10 und dem Hüllrohr 20 wird ein Ringraum 5 ausgebildet, der evakuiert ist. Innerhalb dieses Ringraums ist ein Druckbehälter 30 angeordnet, der am Hüllrohr 20 oder am Metallrohr 10 über eine geeignete Halterung befestigt sein kann (s. Fig. 6- 12).

Im Bereich zwischen dem Druckbehälter 30 und dem Hüllrohr 20 ist ein optisches Element in Form einer planaren Glasplatte 40, 42 angeordnet. Ein Laserstrahl, der senkrecht von oben auf das Hüllrohr 20 auftrifft, durchdringt das Hüllrohr 20 und die planare Glasplatte 42 und gelangt anschließend auf den Druckbehälter. Beim Bohrprozess wird Material des Behälters freigesetzt, das sich an der Unterseite der planaren Glasplatte 42 niederschlägt. Es wird somit verhindert, dass das Behältermaterial sich an dem Hüllrohr 20 niederschlägt.

In der Figur 3 ist eine weitere Ausführungsform dargestellt, bei der das optische Element 40 als konkave Linse 44 ausgebildet ist. Die Abbildungsfehler, die durch die Krümmung des Hüllrohrs 20 entstehen, können durch die Linse 44 kompensiert werden, so dass der Laserpuls, wie vorgesehen, auf die Behälterwand trifft.

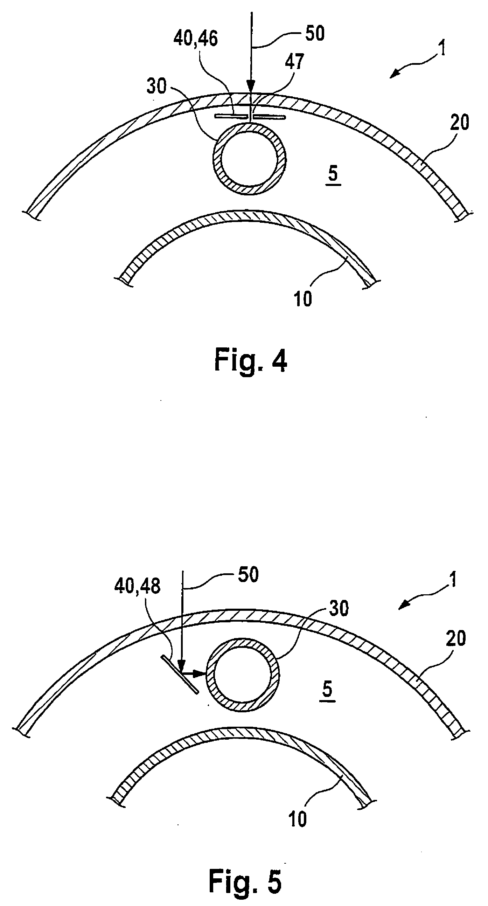

In der Figur 4 ist als optisches Element eine Blende 46 vorgesehen, die eine kreisförmige Blendenöffnung 47 aufweist, die geringfügig größer ist als der Durchmesser des Laserstrahls 50.

In der Figur 5 ist eine weitere Ausführungsform dargestellt, in der das optische Element nicht in dem Bereich zwischen dem Druckbehälter 30 und dem Hüllrohr 20 angeordnet ist, sondern benachbart neben dem Druckbehälter 30. Es handelt sich hierbei um einen Spiegel 48, der so angeordnet ist, dass er als Umlenkspiegel zum Einsatz kommt. Der von außen eindringende Laserstrahl 50 trifft auf den Spiegel 48 auf und wird umgelenkt, so dass ein horizontaler Strahl auf den Druckbehälter 30 trifft. Das ausgeworfene Material des Behälters, das beim Laserbohren des Druckbehälters 30 entsteht, schlägt sich an dem Spiegel 48 nieder und gelangt somit nicht auf das Hüllrohr 20.

Da die optischen Elemente nur einmalig zum Einsatz kommen, wenn der Druckbehälter geöffnet wird, ist der Niederschlag auf den optischen Elementen insoweit auch nicht störend. Nach dem Laserbohren gelangt das Schutzgas aus dem Behälter in den Ringraum 5.

In der Figur 6 ist ein Ende eines Absorberrohrs 1 im Schnitt dargestellt.

Am freien stirnseitigen Ende des Hüllrohres 20 ist ein Übergangselement 22 befestigt, das einen radial nach innen weisenden Bund 23 aufweist. In dem zwischen Hüllrohr 20 und Metallrohr 10 gebildeten Ringraum 5 ist eine Dehnungsausgleichseinrichtung 24 in Form eines Faltenbalgs 25 angeordnet, der mit seinem äußeren Ende 26 an dem Bund 23 des Übergangselementes 22 befestigt ist.

Der Faltenbalg 25 erstreckt sich somit unterhalb des Übergangselementes 22 in den Ringraum 5 und ist am gegenüberliegenden Ende an einem Anschlusselement 27 befestigt, das zu diesem Zweck eine Ringscheibe 28 aufweist. An dieser Ringscheibe ist der mit Schutzgas gefüllte Druckbehälter 30 angeordnet, der entsprechend der Ringscheibe gebogen ausgeführt ist und sich über einen Halbkreis erstreckt Zwischen dem Druckbehälter 30 und dem Hüllrohr 20 ist ein optisches Element 40 in Form einer Glasplatte 42 vorgesehen. Diese Glasplatte kann eben ausgeführt sein oder auch gekrümmt sein.

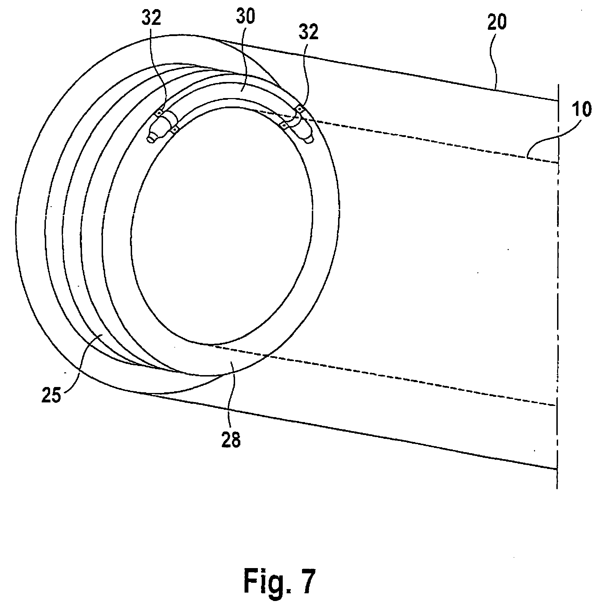

In der Figur 7 ist eine perspektivische Darstellung des Absorberrohrs 1 gemäß der Fig. 6 dargestellt, so dass die gekrümmte Ausführung des Druckbehälters zu sehen ist. An den beiden Enden des gekrümmten Druckbehälters 30 sind zwei Halteelemente 32 vorgesehen, mit denen der Behälter 30 an der Ringscheibe 28 des Anschlusselements 27 befestigt ist.

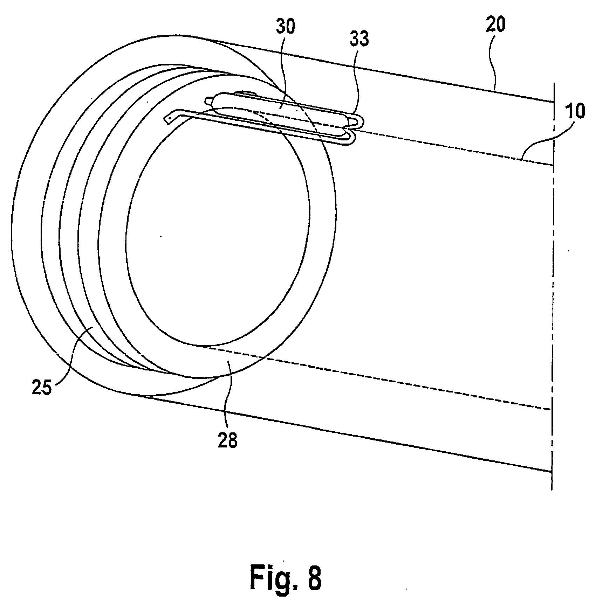

In der Figur 8 ist eine weitere Ausführungsform dargestellt. Auch hier ist der Druckbehälter, der eine Flaschenform aufweist, mittels einer Halteklammer 33 an der Ringscheibe 28 befestigt. Der Druckbehälter erstreckt sich parallel zur Längsachse des Absorberrohrs 1.

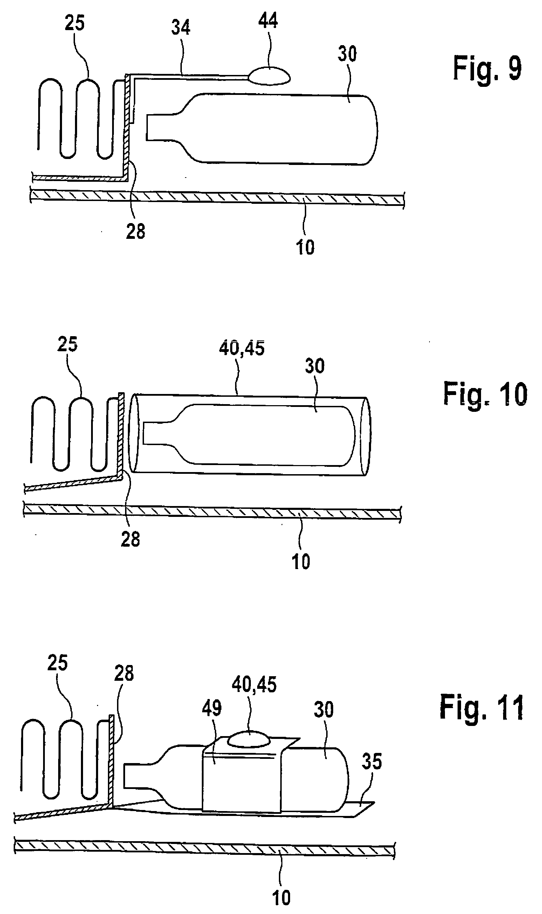

In der Figur 9 ist eine weitere Ausführungsform dargestellt. Der Druckbehälter 30 erstreckt sich ebenfalls zur Längsachse des Absorberrohrs 1 und ist durch ein geeignetes Befestigungselement (nicht dargestellt) an der Ringscheibe 28 befestigt. An der Ringscheibe 28 ist eine weitere Halterung 34 angeordnet, die an ihrem Ende eine Linse 44 trägt.

In der Figur 10 ist eine Ausführungsform dargestellt, bei der der Druckbehälter 30 sich innerhalb eines Glasröhrchens 45 befindet. Diese Ausführungsform hat den Vorteil, dass der gesamte Druckbehälter 30 abgeschirmt ist und der Laserstrahl an beliebigen Stellen auf den Druckbehälter 30 gelenkt werden kann.

In der Figur 11 eine weitere Ausführungsform dargestellt, bei der ein Aufnahmeteller 35 an der Ringscheibe 28 befestigt ist. Der Druckbehälter 30 liegt auf diesem Aufnahmeteller auf, der außerdem noch eine weitere Halterung 49 für die Linse 44 trägt.

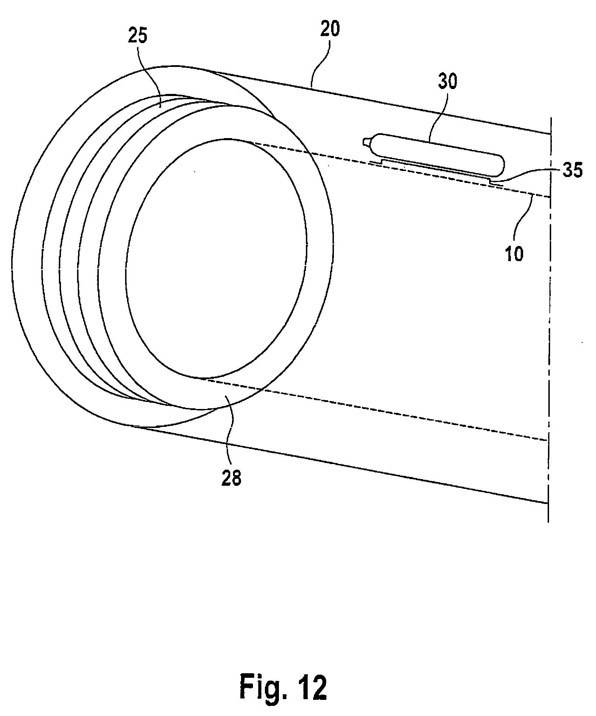

In der Figur 12 ist eine Ausführungsform dargestellt, bei der der Aufnahmeteller 35 auf dem Metallrohr 10 angeordnet ist und den Druckbehälter 30 aufnimmt.

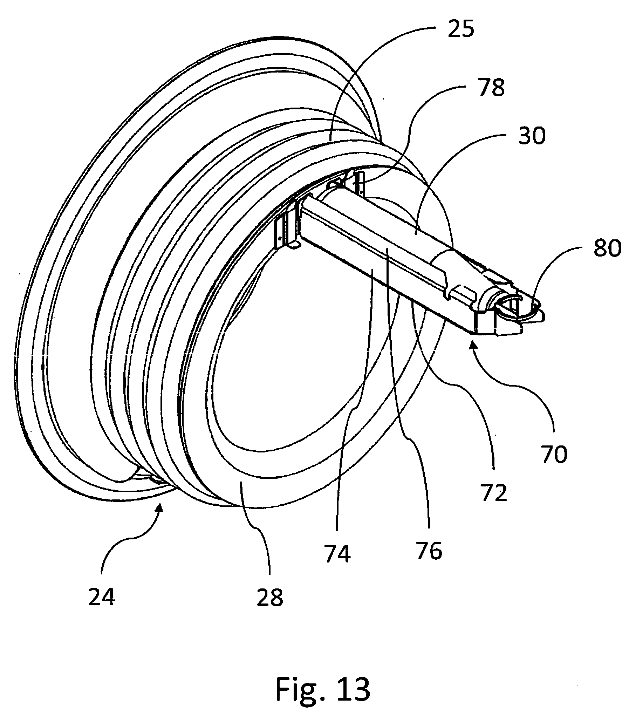

In der Figur 13 ist eine wannenförmige Halterung 70 dargestellt, die mittels eines Befestigungselementes 78 an der Ringscheibe 28 der Dehnungsausgleichseinrichtung 24 angeordnet ist, die als Faltenbalg 25 ausgebildet ist. Die wannenförmige Halterung 70 weist eine Bodenwand 72 auf, die dem Metallrohr 10 zugewandt ist. Ferner besitzt die wannenförmige Halterung 70 Seitenwände 42, die am oberen Rand nach innen gebogene Abschirmwände 76 aufweist. Dadurch wird der Behälter 30 nahezu vollständig umschlossen, wobei nur ein Teil der Behälterwand freigelassen wird, um dort den Laserstrahl anzusetzen.

Die Halterung 70 dient auch zur Aufnahme eines Getters 80.

### Bezugszeichenliste

- 1: Absorberrohr
- 5: Ringraum
- 10: Metallrohr

- 20: Hüllrohr
- 22: Übergangselement
- 23: Bund
- 24: Dehnungsausgleichseinrichtung
- 25: Faltenbalg
- 26: Äußeres Ende
- 27: Anschlusselement
- 28: Ringscheibe
- 29: Befestigungsbund

- 30: Druckbehälter
- 32: Halterungselement
- 33: Halteklammer
- 34: Haltebügel
- 35: Aufnahmeteller

- 36: zylinderförmiger Mantel
- 37: gewölbter Boden
- 38: Flaschenhals
- 39: Öffnung
- 40: Optisches Element
- 42: Glasplatte
- 44: Linse
- 45: Glasröhrchen
- 46: Blende
- 47: Blendenöffnung
- 48: Spiegel
- 49: Halterung

- 50: Laserstrahl

- 60: Verschlusselement
- 62: Schweißnaht

- 70: wannenförmige Halterung
- 72: Bodenwand
- 74: Seitenwand
- 76: Abschirmwand
- 78: Befestigungselement

- 80: Getter

## Patentansprüche

1. Absorberrohr (1) mit einem Metallrohr (10) und mit einem das Metallrohr (10) umgebenden Hüllrohr (20) aus für Solarstrahlung transparentem Material, wobei zwischen dem Metallrohr (10) und dem Hüllrohr (20) ein Ringraum (5) ausgebildet ist, der evakuiert ist und mindestens einen mit Schutzgas befüllten Behälter aufweist, **dadurch gekennzeichnet, dass** der Behälter ein lotfreier Druckbehälter (30) ist.

2. Absorberrohr nach Anspruch 1, **dadurch gekennzeichnet, dass** der Druckbehälter eine Öffnung (39) aufweist, die mit einem Verschlussteil (60) verschlossen ist.

3. Absorberrohr nach Anspruch 2, **dadurch gekennzeichnet, dass** das Verschlussteil (60) aus demselben Material wie der Druckbehälter (30) besteht.

4. Absorberrohr nach Anspruch 2 oder 3, **dadurch gekennzeichnet, dass** das Verschlussteil (60) mittels Schweißen am Druckbehälter (30) befestigt ist.

5. Absorberrohr nach einem der Ansprüche 1 bis 4, **dadurch gekennzeichnet, dass** der Druckbehälter (30) aus Stahl besteht.

6. Absorberohr nach einem der Ansprüche 1 bis 5, **dadurch gekennzeichnet, dass** der Druckbehälter (30) mindestens einen gewölbten Boden (37) aufweist.

7. Absorberrohr nach einem der Ansprüche 1 bis 6, **dadurch gekennzeichnet, dass** der Druckbehälter (30) eine Wandstärke von 0,5 - 1 mm aufweist.

8. Absorberrohr nach einem der Ansprüche 1 bis 6, **dadurch gekennzeichnet, dass** der Druckbehälter (30) eine Wandstärke von 0,2 bis < 0,5 mm aufweist.

9. Absorberrohr nach einem der Ansprüche 1 bis 8, **dadurch gekennzeichnet, dass** der Druckbehälter (30) am Metallrohr (10) oder am Hüllrohr (20) oder an einem Metallrohr (10) und Hüllrohr (20) verbindenden Bauteil angeordnet ist.

10. Absorberrohr nach einem der Ansprüche 1 bis 9, **dadurch gekennzeichnet, dass** im Ringraum (5) benachbart zum Druckbehälter (30) mindestens ein optisches Element (40) angeordnet ist.

11. Absorberrohr nach Anspruch 10, **dadurch gekennzeichnet, dass** das optische Element (40) am Hüllrohr (20), am Metallrohr (10) oder am Druckbehälter (30) angeordnet ist.

12. Absorberrohr nach Anspruch 10 oder 11, **dadurch gekennzeichnet, dass** das optische Element (40) im Bereich zwischen dem Druckbehälter (30) und dem Hüllrohr (20) angeordnet ist.

13. Absorberrohr nach einem der Ansprüche 10 bis 12, **dadurch gekennzeichnet, dass** das optische Element (40) eine Glasplatte (42) oder eine Blende (46) ist.

14. Absorberrohr nach einem der Ansprüche 10 bis 12, **dadurch gekennzeichnet, dass** das optische Element (40) ein Abschnitt eines Glasröhrchens ist, in dem der Druckbehälter (30) angeordnet ist.

15. Absorberrohr nach einem der Ansprüche 10 oder 11, **dadurch gekennzeichnet, dass** das optische Element (40) ein Spiegel (48) ist und seitlich neben dem Druckbehälter (30) angeordnet ist.

## Claims

1. Absorber tube (1) comprising a metal tube (10) and a sleeve tube (20), which is made of a material transparent to solar radiation and encloses the metal tube (10), wherein an annular space (5) which is evacuated and has at least one container filled with protective gas is formed between the metal tube (10) and the sleeve tube (20), **characterized in that** the container is a solderless pressure container (30).

2. Absorber tube according to Claim 1, **characterized in that** the pressure container has an opening (39), which is closed with a closure part (60).

3. Absorber tube according to Claim 2, **characterized in that** the closure part (60) consists of the same material as the pressure container (30).

4. Absorber tube according to Claim 2 or 3, **characterized in that** the closure part (60) is fastened to the pressure container (30) by means of welding.

5. Absorber tube according to one of Claims 1 to 4, **characterized in that** the pressure container (30) consists of steel.

6. Absorber tube according to one of Claims 1 to 5, **characterized in that** the pressure container (30) has at least one curved base (37).

7. Absorber tube according to one of Claims 1 to 6, **characterized in that** the pressure container (30) has a wall thickness of 0.5 mm to 1 mm.

8. Absorber tube according to one of Claims 1 to 6, **characterized in that** the pressure container (30) has a wall thickness of 0.2 mm to < 0.5 mm.

9. Absorber tube according to one of Claims 1 to 8, **characterized in that** the pressure container (30) is arranged on the metal tube (10) or on the sleeve tube (20) or on a component connecting the metal tube (10) and the sleeve tube (20).

10. Absorber tube according to one of Claims 1 to 9, **characterized in that** at least one optical element (40) is arranged in the annular space (5) adjacent to the pressure container (30).

11. Absorber tube according to Claim 10, **characterized in that** the optical element (40) is arranged on the sleeve tube (20), on the metal tube (10) or on the pressure container (30).

12. Absorber tube according to Claim 10 or 11, **characterized in that** the optical element (40) is arranged in the region between the pressure container (30) and the sleeve tube (20).

13. Absorber tube according to one of Claims 10 to 12, **characterized in that** the optical element (40) is a glass plate (42) or a diaphragm (46).

14. Absorber tube according to one of Claims 10 to 12, **characterized in that** the optical element (40) is a portion of a small glass tube in which the pressure container (30) is arranged.

15. Absorber tube according to either of Claims 10 and 11, **characterized in that** the optical element (40) is a mirror (48) and is arranged laterally next to the pressure container (30).

## Revendications

1. Tube absorbeur (1) comprenant un tube métallique (10) et un tube d'enveloppe (20) entourant le tube métallique (10), en matériau transparent aux rayons solaires, un espace annulaire (5) étant réalisé entre le tube métallique (10) et le tube d'enveloppe (20), lequel est évacué et présente au moins un récipient rempli d'un gaz protecteur, **caractérisé en ce que** le récipient est un récipient sous pression sans brasage (30).

2. Tube absorbeur selon la revendication 1, **caractérisé en ce que** le récipient sous pression présente une ouverture (39) qui est fermée avec une partie de fermeture (60).

3. Tube absorbeur selon la revendication 2, **caractérisé en ce que** la partie de fermeture (60) se compose du même matériau que le récipient sous pression (30).

4. Tube absorbeur selon la revendication 2 ou 3, **caractérisé en ce que** la partie de fermeture (60) peut être fixée par soudage au récipient sous pression (30).

5. Tube absorbeur selon l'une quelconque des revendications 1 à 4, **caractérisé en ce que** le récipient sous pression (30) se compose d'acier.

6. Tube absorbeur selon l'une quelconque des revendications 1 à 5, **caractérisé en ce que** le récipient sous pression (30) présente au moins un fond courbe (37).

7. Tube absorbeur selon l'une quelconque des revendications 1 à 6, **caractérisé en ce que** le récipient sous pression (30) présente une épaisseur de paroi de 0,5-1 mm.

8. Tube absorbeur selon l'une quelconque des revendications 1 à 6, **caractérisé en ce que** le récipient sous pression (30) présente une épaisseur de paroi comprise entre 0,2 et < 0,5 mm.

9. Tube absorbeur selon l'une quelconque des revendications 1 à 8, **caractérisé en ce que** le récipient sous pression (30) est disposé au niveau du tube métallique (10) ou au niveau du tube d'enveloppe (20) ou au niveau d'un composant reliant le tube métallique (10) et le tube d'enveloppe (20).

10. Tube absorbeur selon l'une quelconque des revendications 1 à 9, **caractérisé en ce qu'**au moins un élément optique (40) est disposé dans l'espace annulaire (5) à côté du récipient sous pression (30).

11. Tube absorbeur selon la revendication 10, **caractérisé en ce que** l'élément optique (40) est disposé au niveau du tube d'enveloppe (20), au niveau du tube métallique (10) ou au niveau du récipient sous pression (30).

12. Tube absorbeur selon la revendication 10 ou 11, **caractérisé en ce que** l'élément optique (40) est disposé dans la région entre le récipient sous pression (30) et le tube d'enveloppe (20).

13. Tube absorbeur selon l'une quelconque des revendications 10 à 12, **caractérisé en ce que** l'élément optique (40) est une plaque de verre (42) ou un diaphragme (46).

14. Tube absorbeur selon l'une quelconque des revendications 10 à 12, **caractérisé en ce que** l'élément optique (40) est une portion d'un petit tube en verre dans lequel est disposé le récipient sous pression (30).

15. Tube absorbeur selon la revendication 10 ou 11, **caractérisé en ce que** l'élément optique (40) est un miroir (48) et est disposé latéralement à côté du récipient sous pression (30).
